(19) Europäisches Patentamt
European Patent Office
Office européen des brevets

(11) **EP 1 326 105 B1**

(12) **FASCICULE DE BREVET EUROPEEN**

(45) Date de publication et mention
de la délivrance du brevet:
**28.02.2007   Bulletin 2007/09**

(51) Int Cl.:
*G02B 6/28* (2006.01)      *H01S 3/067* (2006.01)

(21) Numéro de dépôt: **02293249.5**

(22) Date de dépôt: **27.12.2002**

(54) **Coupleur optique pour pompe multimode**

Optische Koppler für multimode Pumpe

Optical coupler for multimode pump

(84) Etats contractants désignés:
**AT BE BG CH CY CZ DE DK EE ES FI FR GB GR IE IT LI LU MC NL PT SE SI SK TR**

(30) Priorité:  **03.01.2002  FR 0200045**

(43) Date de publication de la demande:
**09.07.2003   Bulletin 2003/28**

(73) Titulaire: **ALCATEL**
**75008 Paris (FR)**

(72) Inventeurs:
• **Bayart, Dominique**
**92140 Clamart (FR)**
• **Berthelot, Laurent**
**91400 Orsay (FR)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**EP-A- 0 497 243          WO-A-00/49435**
**WO-A-00/60390          WO-A-98/29768**
**WO-A-99/45419          US-A- 5 170 458**

• **KAKARANTZAS G ET AL: "Directional coupling in a twin core photonic crystal fiber using heat treatment" TECHNICAL DIGEST. SUMMARIES OF PAPERS PRESENTED AT THE QUANTUM ELECTRONICS AND LASER SCIENCE CONFERENCE. POSTCONFERENCE TECHNICAL DIGEST (IEEE CAT. NO.01CH37172), TECHNICAL DIGEST. SUMMARIES OF PAPERS PRESENTED AT THE QUANTUM ELECTRONICS AND LASER SC, pages 125-126, XP002215557 2001, Washington, DC, USA, Opt. Soc. America, USA ISBN: 1-55752-663-X**
• **BYEONG HA LEE ET AL: "Photonic crystal fiber coupler" OPTICS LETTERS, 15 MAY 2002, OPT. SOC. AMERICA, USA, vol. 27, no. 10, pages 812-814, XP002215558 ISSN: 0146-9592**

EP 1 326 105 B1

**Description**

La présente invention concerne le domaine des transmissions par fibre optique, et plus spécifiquement un coupleur pour une pompe multimode.

Sont apparues récemment des fibres dites "photoniques", appelées aussi en langue anglaise "photonic crystal fibres" (PCF): ces fibres ne sont pas, comme les fibres classiques, entièrement constituées d'un matériau solide transparent comme la silice dopée; en section, une fibre photonique présente une pluralité de trous d'air. Ces trous sont parallèles à l'axe de la fibre, et s'étendent longitudinalement le long de la fibre. Pratiquement, ces trous peuvent être obtenus en fabriquant la préforme par assemblage de tubes capillaires ou de cylindres de silice, en respectant le motif des trous à obtenir dans la fibre. L'étirage d'une telle préforme fournit une fibre avec des trous correspondant aux tubes capillaires.

La présence de ces trous dans le matériau de la fibre crée des variations d'indice moyen du matériau; ces variations de l'indice peuvent, comme dans une fibre optique classique, être utilisées pour le guidage de signaux lumineux à des longueurs d'onde adaptées. Une description de telles fibres photoniques est fournie dans WO-A-00 49 435 : ce document, outre le principe de fonctionnement des fibres photoniques, décrit un coupleur directionnel ou séparateur de rayon. Ce coupleur est formé en chauffant et en étirant deux fibres photoniques; les régions étirées des deux fibres photoniques sont soudées, lors du chauffage ou lors d'une étape de chauffage ultérieure. La lumière se propageant dans l'une des fibres est alors couplée dans l'autre fibre. Ce document propose aussi d'assembler une fibre photonique à une fibre classique; c'est-à-dire une fibre sans trous; la fibre photonique est étirée et coupée dans la zone étirée. L'étirage de la fibre photonique referme les trous de la fibre, de sorte qu'elle ne présente plus de trous au voisinage de la découpe. La fibre classique - selon la figure une fibre à saut d'indice - est aussi étirée et coupée, de sorte à présenter une taille identique à la taille de la fibre photonique étirée. Les deux fibres sont assemblées bout à bout. Le diamètre de mode s'étend sur toute la fibre dans les régions étirées en forme de cône; dans la partie non-étirée de la fibre photonique ou de la fibre classique, la lumière se propage habituellement. Enfin, ce document indique que l'étirage local d'une fibre photonique multi-coeurs peut permettre de créer un coupleur directionnel local; en effet, l'étirage de la fibre provoque une fermeture partielle des trous et une interaction entre les lumières des différents coeurs.

EP-A-1 043 816 décrit une fibre à double gaine; le signal est transmis dans le coeur dopé de la fibre et une pompe est injectée dans la première gaine. Pour diriger la lumière de la pompe vers le coeur dopé, il est proposé de prévoir dans la première gaine des régions d'indice modifié. Ces régions d'indice modifié peuvent notamment être constituées de trous d'air. Rien dans ce document n'indique la façon dont la pompe est couplée dans la gaine de la fibre.

EP-A-893 862 décrit un faisceau de fibres, présentant six fibres multimode d'injection de pompes, entourant une fibre monomode pour le signal. Les fibres sont assemblées par fusion et étirage pour réduire le diamètre des six fibres d'injection et de la fibre monomode à la taille du coeur d'une fibre à double gaine. Le faisceau obtenu est coupé et couplé bout à bout à la fibre à double gaine. Les fibres d'injection sont des fibres multimodes présentant une ouverture numérique inférieure à celle de la fibre de pompage à double gaine. La fibre monomode est une fibre à saut d'indice, qui sert pour l'injection du signal à amplifier dans la fibre à double gaine, ou pour l'extraction du signal depuis cette fibre. Le diamètre de mode dans la fibre monomode est une fonction décroissante puis croissante du diamètre de coeur; il est donc possible de choisir pour la fibre monomode un diamètre de coeur après fusion et étirage, qui assure en entrée et en sortie de la fibre monomode le même diamètre de mode.

WO 99/45419 décrit un coupleur optique selon le préambule de la revendication 1

Cette solution limite les degrés de liberté dans la conception du système : en effet, les diamètres de coeurs aux deux extrémités du coupleur sont liés. Ceci peut rendre la fabrication plus complexe. En outre, la solution implique que le diamètre de mode décroît puis croît lorsque l'on traverse la partie étirée de la fibre monomode, ce qui peut poser des problèmes. Enfin, le caractère monomode de la fibre pour de fortes valeurs du diamètre de coeur n'est pas nécessairement assuré.

Le problème de l'invention, par rapport à cet enseignement, est de simplifier la fabrication d'un tel coupleur, et de simplifier la gestion des caractéristiques optiques du coupleur le long du chemin suivi par le signal.

Plus précisément, l'invention propose un coupleur optique, présentant :

- une fibre optique photonique présentant des extrémités étirées;
- au moins une fibre optique multimode couplée à la fibre optique photonique.

Dans un mode de réalisation, la fibre optique photonique est au centre de l'assemblage avec les fibres optiques multimodes. La fibre optique photonique peut être assemblée avec la ou les fibres optiques multimodes par fusion étirage, ou encore être assemblée avec la ou les fibres optiques multimodes en dehors de la partie étirée.

La fibre photonique peut aussi être une fibre amplificatrice. Dans un mode de réalisation, la fibre photonique-est-une fibre multimode; il est alors avantageux qu'elle présente à l'état non étiré un diamètre de coeur multimode supérieur ou égal à 100 micromètres. Dans un autre mode de réalisation, la fibre photonique est une fibre à double gaine. Dans ce cas, il est préférable qu'elle présente à l'état non étiré un diamètre de coeur multimode supérieur ou égal à 100 micromètres, et/ou un diamètre de mode pour le coeur monomode supérieur ou égal à 15 micromètres.

Avantageusement, la différence entre le diamètre du coeur multimode de la fibre photonique et le diamètre du coeur multimode de la cavité laser est inférieure ou égale à 5 %.

L'invention propose encore un amplificateur optique, présentant :

- un tel coupleur, avec une fibre photonique à double gaine;
- une fibre optique amplificatrice à gaine multiple couplée à une extrémité étirée du coupleur.

Dans ce cas, il est avantageux que la différence entre le diamètre de mode du coeur monomode de la fibre optique à gaine multiple et le diamètre de mode du coeur monomode de la fibre photonique soit inférieure ou égale à 5 %; on peut aussi imposer que la différence entre le diamètre du coeur multimode de la fibre optique à gaine multiple et le diamètre du coeur multimode de la fibre photonique soit inférieure ou égale à 5 %.

Dans un mode de réalisation, l'amplificateur présente un deuxième coupleur du même genre, l'extrémité de la fibre à gaine multiple opposée au premier coupleur étant couplée à une extrémité étirée du deuxième coupleur. H

D'autres caractéristiques et avantages de l'invention apparaîtront à la lecture de la description qui suit de modes de réalisation de l'invention, donnés à titre d'exemple et en référence aux dessins annexés, qui montrent

- figure 1, une représentation schématique d'un coupleur optique n'étant pas selon un mode de réalisation de l'invention;
- figure 2, une représentation schématique d'un coupleur optique selon un mode de réalisation de l'invention;
- figures 3 et 4, des graphes montrant le diamètre de mode du coeur monomode et le diamètre du coeur multimode dans le coupleur de la figure 2.

L'invention propose, pour réaliser un coupleur optique, d'assembler une fibre optique photonique et au moins une fibre optique multimode. La fibre photonique peut être une fibre optique multimode ou à double gaine. Dans un premier mode de réalisation, la fibre photonique est une fibre multimode; dans ce cas, le coupleur est particulièrement adapté à être utilisé pour l'injection de pompes multimodes, par exemple dans une cavité laser formée d'une fibre à double gaine. Dans ce premier mode de réalisation, la fibre photonique ne sert pas pour l'injection d'un signal, mais assure une bonne adaptation du coupleur à la cavité laser, en termes d'ouverture numérique et de diamètres.

Dans un deuxième mode de réalisation, la fibre photonique est une fibre à double gaine; le coupleur est alors particulièrement adapté à être utilisé comme multiplexeur, par exemple pour l'injection d'un signal et de pompes multimodes dans une fibre d'amplification dopée à double gaine. Le coeur monomode de la fibre photonique sert alors pour l'injection du signal à amplifier (ou l'extraction du signal amplifié), tandis que le coeur multimode de la fibre photonique sert à l'injection des pompes multimodes.

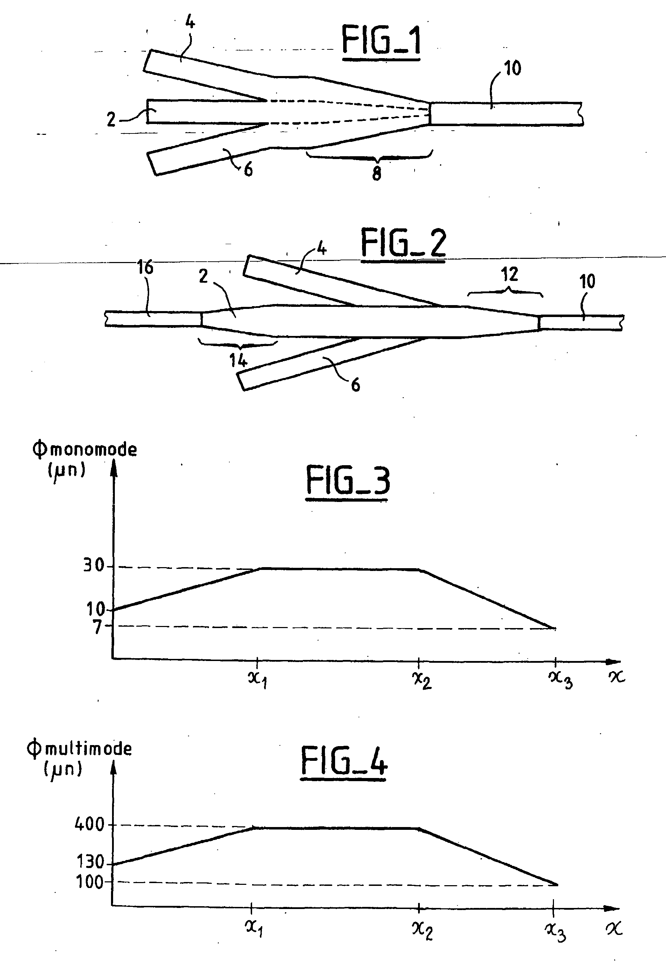

Dans un cas comme dans l'autre, le coupleur peut être fabriqué par fusion et étirage, ou par couplage des fibres et étirage. La partie étirée, de forme conique, peut comme dans EP-A-893 862 correspondre au lieu d'assemblage des fibres du coupleur; ce mode de réalisation est celui de la figure 1. On peut aussi séparer d'une part le couplage des fibres multimode et de la fibre photonique et d'autre part l'étirage de la fibre; dans ce cas, seule la fibre photonique est étirée; ce mode de réalisation est représenté à la figure 2.

Comme indiqué plus haut, on entend par fibre photonique une fibre qui n'est pas, comme les fibres classiques, entièrement constituée d'un matériau solide transparent comme la silice dopée; en section, une telle fibre photonique présente une pluralité de trous d'air - ou d'un autre gaz, ou encore de vide. Ces trous sont parallèles à l'axe de la fibre, et s'étendent longitudinalement le long de la fibre. Ces trous, comme indiqué dans la demande déposée par la demanderesse le 16.03.01 sous le numéro 01 03639 et intitulé "Fibre optique photonique à forte surface effective ", ont pour effet d'induire dans la fibre des variations locales de l'indice; ces variations, comme les variations induites dans la fibre par des dopants, participent au guidage de la lumière dans la fibre.

La figure 1 montre une représentation schématique d'un coupleur optique n'étant pas selon un mode de réalisation de l'invention. Dans cet exemple de réalisation, le coupleur est adapté au couplage dans la fibre de sortie 10 de pompes multimodes. La fibre photonique est multimode, i.e. est susceptible de transmettre de la lumière suivant plusieurs modes; elle peut présenter ou non un coeur monomode. Le coupleur est formé de la fibre optique photonique 2 multimode, qui est assemblée à au moins une fibre optique multimode; dans l'exemple de la figure, on a représenté deux fibres optiques multimode 4 et 6. On pourrait n'utiliser qu'une seule fibre optique multimode; inversement, comme dans EP-A-0 893 862, on pourrait utiliser six fibres optiques multimodes réparties autour de la fibre photonique. Le choix du nombre de fibres optiques multimode dépend des caractéristiques des fibres, de la nature de la lumière à coupler, ainsi que des applications envisagées.

La fibre optique photonique 2 et les fibres multimodes sont assemblées par fusion et sont ensuite étirées pour former une partie conique 8; dans l'assemblage, la fibre optique photonique reste au centre. Ce mode d'assemblage correspond à celui qui est proposé dans la EP-A-0 893 862. On pourrait aussi coupler les fibres multimode à la fibre photonique, par des techniques de couplage latéral décrites dans WO-A-95 10868, WO-A-95 10869 ou WO-A-96 20519, de sorte que la lumière injectée dans les fibres multimode soit couplée dans la fibre photonique. La partie conique serait alors distincte de la partie dans laquelle les fibres sont couplées; Dans ce cas, la partie conique correspondrait simplement à une diminution du diamètre de la fibre photonique, s'accompagnant le cas échéant d'une disparition des trous de la fibre.

Dans un cas comme dans l'autre, la formation du cône permet de couper l'assemblage étiré à un diamètre de coeur multimode correspondant au diamètre du coeur multimode de la fibre 10 à laquelle le coupleur est raccordé; la différence des diamètres de coeur multimode est de préférence inférieure à 5%. Cette fibre 10 est par exemple une fibre à double gaine, utilisée comme cavité laser. On entend ici par fibre à double gaine, de façon connue en soi, une fibre qui présente un premier coeur adapté à assurer la propagation suivant un mode unique d'une lumière, et un deuxième coeur adapté à assurer la propagation de la lumière suivant différents modes; la fibre peut donc conduire dans le coeur monomode un signal ou une lumière monomode, et conduire simultanément dans le coeur multimode de la lumière de pompe. Le diamètre de mode pour le coeur monomode est typiquement de l'ordre de 5 micromètres, et le diamètre du coeur multimode est typiquement de l'ordre de 200 micromètres. Une telle fibre peut être obtenue par exemple par le choix d'un profil d'indice à deux marches : la première marche ou saut d'indice assure le confinement de la lumière monomode, tandis que la deuxième marche assure le confinement de la lumière multimode.

L'étirage de la fibre photonique - le cas échéant conjointement avec les fibres multimodes - permet d'adapter le diamètre de coeur multimode et l'ouverture numérique, en sortie du coupleur. La fibre photonique présente au départ un grand diamètre de coeur multimode et une grande ouverture numérique; ainsi, cette adaptation reste possible, même si la l'étirage de la fibre et la diminution de diamètre correspondant induisent une diminution du diamètre de coeur multimode et de l'ouverture numérique. L'utilisation d'une fibre photonique permet de conserver un bon couplage avec la fibre 10 disposée en sortie de coupleur. La différence entre les diamètres de coeur multimode de la fibre photonique et de la fibre formant la cavité laser est de préférence inférieure à 5 %. L'extraction du signal laser s'effectue de façon connue en soi, par l'extrémité de la cavité opposée au coupleur; l'injection du signal s'effectue alors par l'extrémité de la cavité reliée au coupleur. On peut aussi disposer le coupleur dans la cavité laser, auquel cas la fibre photonique du coupleur fait partie de la cavité; dans ce cas, il peut aussi être avantageux que la fibre photonique soit dopée.

A titre d'exemple, dans le cas d'un coupleur extérieur à la cavité laser, on peut utiliser pour la fibre formant la cavité laser une fibre à double gaine, présentant un diamètre de coeur multimode de 200 micromètres, et une ouverture numérique de 0,45 . Comme fibre photonique, on peut utiliser une fibre du genre de celle de la demande de brevet français précitée, qui est multimode et n'a pas nécessairement de coeur monomode; elle présente avant étirage un diamètre de coeur de l'ordre de 600 micromètres et une ouverture numérique de 0,16 . L'étirage de cette fibre fait passer le diamètre de coeur à 200 micromètres et l'ouverture numérique à 0,45 .

Dans le cas d'un coupleur disposé dans la cavité, on peut utiliser la même fibre pour la cavité; comme fibre photonique, on peut aussi utiliser la même fibre, ou encore une fibre dopée du genre décrit dans la demande de brevet français déposée par la demanderesse le 16.03.01 sous le numéro 01 03640 et intitulée " Fibre optique photonique à double gaine " . On prévoit alors une deuxième partie effilé ou conique à l'autre extrémité du coupleur pour relier cette autre extrémité à la cavité laser.

Dans l'exemple d'un coupleur utilisé pour le pompage dans une cavité laser de pompes multimodes, l'utilisation d'une fibre photonique permet d'augmenter les degrés de liberté dans la conception du système, notamment dans le choix des diamètres de mode et des ouvertures numériques.

La figure 2 montre un mode de réalisation de l'invention. Dans ce mode de réalisation, le coupleur est utilisé comme multiplexeur, et la fibre photonique sert pour l'injection d'un signal. Il est alors avantageux que la fibre photonique soit une fibre à double gaine; le coeur monomode est utilisé pour l'injection (ou l'extraction du signal) tandis que les lumières multimodes sont couplées par les fibres assemblées dans le coeur multimode de la fibre photonique. L'utilisation d'une fibre photonique dans ce mode de réalisation présente les avantages suivants. La fibre photonique présente, avant étirage, un diamètre de mode important pour le coeur monomode, qui peut atteindre des valeurs de l'ordre de 30 micromètres, et un diamètre de coeur multimode qui peut atteindre 400 micromètres ou plus; après étirage de la fibre, pour faire passer le diamètre de coeur multimode à 100 micromètres, le diamètre de mode du coeur monomode est réduit à 7 micromètres, dans les mêmes proportions. L'ouverture numérique est augmentée d'un facteur inverse et peut atteindre de valeurs de 0,3 à 0,6 en sortie de la partie conique.

Le diamètre de mode du coeur monomode de la fibre étirée est alors sensiblement identique au diamètre de mode d'une fibre montée en sortie du coupleur de l'invention; la différence des diamètres de mode est de préférence inférieure à 5%. L'invention permet donc une bonne adaptation en sortie du coupleur, pour le signal monomode. Cette caractéristique est liée à la présence des-trous dans la fibre, qui participent au confinement de la lumière monomode dans le coeur monomode, malgré les dimensions importantes de ce coeur.

Par ailleurs, la fibre photonique présente aussi un coeur multimode de dimensions importantes avant étirage; le coeur multimode peut présenter, après étirage, un diamètre compatible avec celui de la fibre montée en sortie du coupleur. La différence des diamètres de coeur multimode est encore avantageusement inférieure à 5%.

Le coupleur de la figure 2 est semblable à celui de la figure 1; toutefois, l'assemblage des fibres dans le coupleur de la figure 2 est effectué à distance de la partie conique 12 de la fibre photonique; en outre, la fibre photonique est utilisée pour l'injection du signal et présente donc à son extrémité correspondant à l'entrée du coupleur une partie étirée 14; l'étirage permet de réduire le diamètre de mode du coeur monomode de la fibre photonique, pour l'adapter au diamètre de mode de la fibre 16 reliée à l'entrée du coupleur pour injecter le signal. Dans l'exemple d'une fibre SMF, le diamètre de mode pourrait être de l'ordre de 10 micromètres; cette valeur peut être atteinte pour le diamètre de mode du coeur monomode de la fibre photonique, en diminuant le diamètre externe de la fibre photonique. On comprend dans ce cas que pour l'injection du signal, le diamètre du coeur multimode de la fibre photonique est sans incidence.

Comme pour l'adaptation en sortie du coupleur, l'utilisation d'une fibre photonique permet donc une adaptation en entrée du coupleur; la fibre photonique présente aussi un coeur monomode sur toute sa longueur, même dans la partie non-étirée.

On donne maintenant des exemples d'amplificateurs construits à partir d'un coupleur du genre de la figure 2. Dans le premier exemple, la fibre photonique est dopée, et assure l'amplification. On peut alors relier chaque extrémité du coupleur à des fibres SMF, d'un diamètre de coeur de l'ordre de 10 micromètres. On utilise pour la fibre photonique une fibre du genre décrit dans la demande 01 03640. Le cas échéant, on augmente la longueur de fibre photonique. La fibre présente avant étirage un diamètre de coeur multimode de 500 micromètres et après étirage un diamètre de coeur multimode de 125 micromètres - qui est sans incidence; le diamètre de coeur monomode passe de 40 à 10 micromètres, ce qui assure l'adaptation à la fibre SMF. On peut utiliser quatre fibres multimodes d'un diamètre de coeur de 100 micromètres, qui couplent les pompes dans la fibre photonique.

Dans un deuxième exemple, le multiplexeur est distinct de la fibre d'amplification; on peut dans ce cas utiliser la fibre photonique de la demande 01 03639, qui n'est pas nécessairement dopée. La fibre photonique peut présenter un diamètre de coeur multimode de 400 micromètres et un diamètre de mode du coeur monomode de 30 micromètres. En entrée, la fibre photonique est étirée pour présenter un diamètre de mode de coeur monomode de l'ordre de 10 micromètres, comme la fibre SMF fournissant le signal. En sortie, la fibre photonique est étirée pour présenter un diamètre de mode du coeur monomode de l'ordre de 7 micromètres; le diamètre de coeur multimode passe à 100 micromètres; l'ouverture numérique passe de 0,15 à 0,6. Le coupleur est donc adapté en sortie à une fibre d'amplification présente de telles valeurs de diamètres de coeur et d'ouverture numérique. On peut utiliser les mêmes pompes que dans l'exemple précédent.

Dans un troisième exemple, on utilise une fibre photonique du même genre que dans le deuxième exemple, mais avec un diamètre de coeur multimode de 100 micromètres, un diamètre de mode de coeur monomode de 14 ou 15 micromètres et une ouverture numérique de 0,15 ; on utilise deux pompes présentant chacune un diamètre de coeur multimode de 50 micromètres, avec une ouverture numérique de 0,15 . En sortie, la fibre photonique est étirée pour présenter un diamètre de coeur monomode de l'ordre de 7 micromètres; le diamètre de coeur multimode passe à 50 micromètres; l'ouverture numérique passe de 0,15 à 0,22. Cet exemple présente, par rapport au deuxième, l'avantage de permettre d'utiliser plus d'une pompe, tout en ayant une ouverture numérique faible en sortie. La fibre d'amplification peut être une fibre sans revêtement polymère de faible indice (du genre qui permettent d'augmenter l'ouverture numérique, mais dégradent les performances mécaniques).

Plus généralement, on peut utiliser la relation suivante pour déterminer les diamètres d'entrée et de sortie en fonction du nombre de fibres multimode. On note $d_1$ et $d_2$ les diamètres de coeur multimode d'entrée et de sortie, $NA_1$ et $NA_2$ les ouvertures numériques d'entrée et de sortie, et n le nombre de fibres multimodes. On appelle ici "entrée" les caractéristiques de la fibre photonique avant le couplage avec les fibres multimodes, et "sortie" les caractéristiques de cette fibre photonique après le couplage avec les fibres multimodes. On a alors :

$$(d_2.NA_2/ d_1.NA_1)^2 = n$$

ce qui dans l'exemple de huit fibres, avec des diamètres de coeur multimode d'entrée et de sortie identiques montre que l'ouverture numérique de 0,12 en entrée passe à 0,34 en sortie.

L'utilisation d'une fibre photonique permet de conserver le long de la partie étirée des caractéristiques de propagation au moins aussi avantageuses que celles présentes en entrée et en sortie de coupleur; d'un point de vue qualitatif, l'étirage de la fibre photonique conduit à une diminution homothétique de la taille des trous présents dans la fibre, voire à leur disparition complète. Si la fibre photonique présente au départ un diamètre de mode important, le diamètre de mode dans le coupleur décroît dans la zone conique, mais reste toujours supérieur au diamètre de mode en sortie du coupleur.

On peut à cet effet se référer à la figure 4 du document EP-A-0 893 862; cette figure montre que le diamètre de mode est une fonction décroissante puis croissante du diamètre de coeur d'une fibre étirée. Ce document propose de choisir l'étirement de telle sorte que le diamètre de mode de la fibre étirée soit égal au diamètre de mode de la fibre avant étirement. Ceci correspond au tracé sur le graphe du diamètre de mode en fonction du diamètre de coeur d'une ligne horizontale, coupant la courbe en deux points. A l'inverse, l'invention propose de choisir une fibre photonique, avec un diamètre de mode à l'état non étiré qui est tel que l'on peut rester dans le coupleur dans la partie croissante de la fonction associant le diamètre de mode au diamètre de coeur. Ainsi, le diamètre de mode diminue dans la partie conique, et atteint une valeur minimale au point de sortie du coupleur; toutefois, dans tout le coupleur, il reste supérieur à cette valeur. La fibre photonique présente en outre un coeur monomode sur toute sa longueur.

La fibre photonique est avantageusement choisie de sorte à présenter un diamètre de coeur multimode d'au moins 100 micromètres, avant étirage. Cette valeur assure que l'étirage conduit à des valeurs de diamètre de coeur multimode compatibles avec les fibres reliées au coupleur. Si la fibre photonique est une fibre à double gaine, il est aussi avantageux qu'elle présente un diamètre de coeur monomode d'au moins 15 micromètres; ceci assure que l'étirage conduit à des diamètres de coeur monomode compatibles avec les fibres reliées au coupleur.

Les figures 3 et 4 sont des graphes montrant respectivement le diamètre de mode du coeur monomode et du diamètre du coeur multimode dans le deuxième exemple de la figure 2. On a porté en abscisse la distance le long du coupleur, en mm, et en ordonnées le diamètre de mode ou le diamètre de coeur multimode, en micromètres. L'abscisse 0 correspond au début de la fibre photonique, autrement dit au point de couplage avec la fibre 16 sur la figure 2. A cet endroit, la fibre présente un diamètre de mode du coeur monomode de 10 micromètres, qui correspond au diamètre de coeur d'une fibre à saut d'indice de l'état de la technique. Le diamètre du coeur multimode est de l'ordre de 130 micromètres. La partie effilée ou conique 14 s'étend entre l'abscisse 0 et l'abscisse x1; celle-ci peut présenter une valeur de l'ordre de 2 m. A cette abscisse, la fibre photonique - non-étirée - présente un diamètre de mode du coeur monomode de 30 micromètres, et un diamètre du coeur multimode de 400 micromètres. Entre les abscisses x1 et x2, la fibre photonique présente un diamètre constant; cette partie correspond dans la figure 2 au lieu du couplage des fibres multimode à la fibre photonique; la longueur x2 - x1 est la longueur nécessaire au couplage latéral des fibres multimodes, et peut être de l'ordre de 2 à 3 mètres; dans un exemple où la fibre photonique sert de fibre amplificatrice, cette longueur serait plus importante. La partie effilée ou conique 12 s'étend entre l'abscisse x2 et l'abscisse x3, sur une longueur de l'ordre de 2 m. Le diamètre de mode du coeur monomode en sortie est de l'ordre de 7 micromètres, et le diamètre du coeur multimode est de l'ordre de 100 micromètres : ces valeurs correspondent à celles d'une fibre à double gaine classique.

Les graphes des figures 3 et 4 montrent que, sur toute la longueur du coupleur, la fibre photonique présente un diamètre de mode supérieur ou égal à une valeur de 7 micromètres. Plus spécifiquement, dans la première partie effilée 14, entre les abscisses 0 et x1, le diamètre de mode augmente. Il atteint la valeur de 100 micromètres dans la partie non effilée de la fibre, entre les abscisses x1 et x2. Le diamètre de mode décroît ensuite, dans la partie 12 du coupleur. Sur toute la longueur du coupleur, la fibre reste monomode pour le signal transmis. A titre de comparaison, dans le dispositif du document EP-A-0 893 862, le diamètre de mode présente une valeur nominale de 10 micromètres aux extrémités du coupleur, mais décroît à 7,5 micromètres dans le coupleur.

L'invention est décrite plus haut dans un mode de réalisation préféré. Elle est susceptible de nombreuses variantes; notamment, on peut faire changer les paramètres définissant la fibre photonique ou les fibres multimodes. On pourrait utiliser pour injecter la lumière de pompe des fibres autres que des fibres multimodes. Le coupleur peut être utilisé pour d'autres applications que l'amplificateur ou le laser décrits. Dans les exemples d'amplificateur, on a mentionné une fibre optique d'amplification à double gaine; on peut aussi utiliser une fibre optique à gaine multiple, ou une fibre optique photonique, du genre décrit dans la demande de brevet français 01 03640 de la demanderesse. Dans les exemples, on a considéré un système mono-directionnel; un système bi-directionnel est aussi possible. Le montage peut être symétrique, avec un coupleur injectant le signal ou les pompes à chaque extrémité de la cavité laser ou de la fibre amplificatrice. On peut aussi prévoir un montage séquentiel, avec des coupleurs injectant les pompes dans une même direction de propagation, dans des sections successives de fibre formant une cavité laser ou une fibre amplificatrice.

**Revendications**

**1.** Coupleur optique comprenant une fibre monomode d'entrée (16), des moyens de couplage de ladite fibre d'entrée (16) avec au moins une fibre optique multimode d'injection de pompe (4, 6), et une fibre de sortie (10), **caractérisé en ce que** les moyens de couplage comprennent une section monomode de large diamètre étirée aux extrémités (12, 14), ladite section étant une portion d'une fibre photonique (2).

**2.** Coupleur selon la revendication 1, dans lequel ladite fibre photonique est au centre de l'assemblage avec lesdites fibres optiques multimodes d'injection de pompe.

**3.** Coupleur selon l'une des revendications 1 et 2, dans lequel ladite fibre photonique est assemblée avec ladite ou lesdites fibres optiques multimodes d'injection de pompe par fusion étirage.

**4.** Coupleur selon l'une des revendications 1 et 2, dans lequel ladite fibre photonique est assemblée avec ladite au moins une fibre optique multimode d'injection de pompe en dehors de ses parties étirées.

**5.** Coupleur selon l'une des revendications 1 à 4, dans lequel ladite fibre photonique est une fibre amplificatrice.

**6.** Coupleur selon l'une des revendications 1 à 5, dans lequel ladite fibre photonique est une fibre à double gaine.

**7.** Coupleur selon la revendication 6, dans lequel ladite fibre photonique présente à l'état non étiré un diamètre de coeur multimode supérieur ou égal à 100 micromètres.

**8.** Coupleur selon l'une des revendications 6 et 7, dans lequel ladite fibre photonique présente à l'état non étiré un diamètre de mode pour le coeur monomode supérieur ou égal à 15 micromètres.

**9.** Amplificateur optique, comprenant :

    - un coupleur selon l'une des revendications 6 à 8,
    - une fibre optique amplificatrice à gaine multiple couplée à une extrémité étirée du coupleur.

**10.** Amplificateur selon la revendication 9, dans lequel la différence entre le diamètre de mode du coeur monomode de ladite fibre optique à gaine multiple et le diamètre de mode du coeur monomode de ladite fibre photonique est inférieure ou égale à 5 %.

**11.** Amplificateur selon l'une des revendications 9 et 10, dans lequel la différence entre le diamètre du coeur multimode de ladite fibre optique à gaine multiple et le diamètre du coeur multimode de ladite fibre photonique est inférieure ou égale à 5 %.

**12.** Amplificateur selon l'une des revendications 9 à 11, comprenant un deuxième coupleur selon l'une des revendications 6 à 8, l'extrémité de ladite fibre à gaine multiple opposée au premier coupleur étant couplée à une extrémité étirée du deuxième coupleur.

## Claims

**1.** Optical coupler comprising a monomode input fibre (16), means for coupling said input fibre (16) to at least one multimode pump injection optical fibre (4, 6), and an output fibre (10), **characterised in that** the coupling means comprise a large diameter monomode section stretched at the extremities (12, 14), said section being a portion of a photonic fibre.

**2.** Coupler according to claim 1, in which said photonic fibre is at the centre of the assembly with said pump injection multimode optical fibres.

**3.** Coupler according to claim 1 or 2, in which said photonic fibre is assembled with said pump injection multimode optical fibre(s) by means of melting and stretching.

**4.** Coupler according to claim 1 or 2, in which said photonic fibre is assembled with said at least one pump injection multimode optical fibre(s) outside its stretched portions.

**5.** Coupler according to one of claims 1 to 4, in which said photonic fibre is an amplifying fibre.

**6.** Coupler according to one of claims 1 to 5, in which said photonic fibre is a double cladding fibre.

**7.** Coupler according to claim 6, in which said photonic fibre has in a non-stretched state a multimode core diameter greater than or equal to 100 micrometres.

**8.** Coupler according to claim 6 or 7, in which said photonic fibre has in a non-stretched state a mode diameter for the monomode core greater than or equal to 15 micrometres.

**9.** Optical amplifier having:

    • a coupler according to one of claims 6 to 8;
    • a multiple cladding amplifying optical fibre coupled to a stretched extremity of the coupler;

**10.** Amplifier according to claim 9, in which the difference between the diameter of the monomode core of said multiple cladding optical fibre and the diameter of the monomode core of said photonic fibre is less than or equal to 5%.

**11.** Amplifier according to claim 9 or 10, in which the difference between the diameter of the multimode core of said multiple cladding optical fibre and the diameter of the multimode core of said photonic fibre is less than or equal to 5%.

**12.** Amplifier according to any one of claims 1 to 11 having a second coupler according to one of claims 6 to 8, the extremity of said multiple cladding fibre opposite the first coupler being coupled to a stretched extremity of the second coupler.

## Patentansprüche

**1.** Optischer Koppler beinhaltend eine monomode Eingangsfaser (16), Mittel zur Kopplung dieser Eingangsfaser (16) mit mindestens einer multimoden Optikfaser für Pumpeneinspritzung (4, 6), und eine Ausgangsfaser (10), **dadurch gekennzeichnet, dass** die Mittel zur Kopplung einen monomoden Abschnitt mit breitem Durchmesser enthalten, der an den Enden (12, 14) gestreckt ist, wobei dieser Abschnitt ein Teil einer Photonenfaser (2) ist.

2. Koppler gemäß Anspruch 1, bei dem diese Photonenfaser in der Mitte der Verbindung mit diesen multimoden Optikfasern für Pumpeneinspritzung ist.

3. Koppler gemäß einem der Ansprüche 1 und 2, bei dem diese Photonenfaser mit dieser oder diesen multimoden Optikfaser/n für Pumpeneinspritzung durch Streckschmelzen verbunden ist.

4. Koppler gemäß einem der Ansprüche 1 und 2, bei dem diese Photonenfaser mit dieser mindestens einen multimoden Optikfaser für Pumpeneinspritzung außerhalb seiner gestreckten Teile verbunden ist.

5. Koppler gemäß einem der Ansprüche 1 bis 4, bei dem diese Photonenfaser eine Verstärkerfaser ist.

6. Koppler gemäß einem der Ansprüche 1 bis 5, bei dem diese Photonenfaser eine Faser mit Doppelmantel ist.

7. Koppler gemäß Anspruch 6, bei dem diese Photonenfaser im nicht gestreckten Zustand einen multimoden Kerndurchmesser größer oder gleich 100 Mikrometer aufweist.

8. Koppler gemäß einem der Ansprüche 6 und 7, bei dem diese Photonenfaser im nicht gestreckten Zustand einen Modendurchmesser für den monomoden Kern größer oder gleich 15 Mikrometer aufweist.

9. Optischer Verstärker, beinhaltend:

   - einen Koppler gemäß einem der Ansprüche 6 bis 8,
   - eine verstärkende Optikfaser mit Mehrfachmantel, die an ein gestrecktes Ende des Kopplers gekoppelt ist.

10. Verstärker gemäß Anspruch 9, bei dem der Unterschied zwischen dem Modendurchmesser des monomoden Kerns dieser Optikfaser mit Mehrfachmantel und dem Modendurchmesser des monomoden Kerns dieser Photonenfaser kleiner oder gleich 5 % ist.

11. Verstärker gemäß einem der Ansprüche 9 und 10, bei dem der Unterschied zwischen dem Durchmesser des multimoden Kerns dieser Optikfaser mit Mehrfachmantel und dem Durchmesser des multimoden Kerns dieser Photonenfaser kleiner oder gleich 5 % ist.

12. Verstärker gemäß einem der Ansprüche 9 bis 11, beinhaltend einen zweiten Koppler gemäß einem der Ansprüche 6 bis 8, wobei das Ende dieser Faser mit Mehrfachmantel, das dem ersten Koppler gegenüber liegt, an ein gestrecktes Ende des zweiten Kopplers gekoppelt ist.

## FIG_1

## FIG_2

## FIG_3

$\phi$ monomode
($\mu$n)

## FIG_4

$\phi$ multimode
($\mu$n)